# EUROPEAN PATENT SPECIFICATION

(11) **EP 4 561 901 B1**
(45) Date of publication and mention of the grant of the patent: **22.07.2026**
(21) Application number: 23748531.3
(22) Date of filing: 28.07.2023
(51) Int. Cl.: B64D 33/08, B64D 13/06, B64D 27/33, B64D 27/34, B64D 27/357, B64D 31/18, H01M 10/625, H01M 10/6567

(54) **THERMAL MANAGEMENT SYSTEM**
WÄRMEVERWALTUNGSSYSTEM
SYSTÈME DE GESTION THERMIQUE

(30) Priority: 29.07.2022 SE 2250934
(43) Date of publication of application: 04.06.2025
(73) Proprietor: Heart Aerospace AB, 417 55 Göteborg (SE)
(72) Inventor: BASTOS CASAGRANDE, Celso Valerio, 417 64 Göteborg (SE); CUIN, Matheus, 414 57 Göteborg (SE); STABILE DE OLIVEIRA, Fabio, 418 75 Göteborg (SE)
(74) Representative: Murgitroyd & Company
(86) International application number: PCT/EP2023/071031
(87) International publication number: WO 2024/023316

(56) References cited:
- DE-A1- 102017 211 561
- US-A1- 2011 284 201
- US-A1- 2012 000 630
- US-A1- 2012 175 080
- US-A1- 2019 383 568
- US-A1- 2020 303 792
- US-A1- 2020 381 985

## Description

### TECHNICAL FIELD

The invention relates to a thermal management system comprising a fluid cooling circuit comprising a cooling channel in a thermal load arranged to cool the thermal load. The invention also relates to an electric aircraft comprising a thermal management system.

### BACKGROUND ART

All electric equipment generate heat that needs to be taken care of so that the equipment does not overheat and damage the equipment. Over the last decades, more and more transportation has moved away from fossil fuels to electrical propulsion. One of the more recent areas of transportation to move to electrical propulsion is air traffic. Today, work is being done to develop electric aircraft that can carry passengers and cargo and replace current fossil fuel driven aircraft. As in every transportation solution relying on electric power for propulsion, thermal management is important to maintain a good condition on parts of the aircraft that would otherwise be damaged or destroyed by overheating.

US2020/0180771 A1 shows an example of a thermal management system for an electric aircraft. A thermal management system includes a heat source exchanger in thermal communication with an aircraft heat source and a heat sink exchanger in thermal communication with a fan air flow path of an electric propulsion engine. A thermal distribution bus extends from the heat source exchanger to the heat sink exchanger. A control system is operably connected to the thermal management system for selectively thermally coupling the heat sink exchanger with the heat source exchanger.

However, a system according to US2020/0180771 A1 where the fan air flow path of the electric propulsion engine is used to provide cooling to the heat sink exchanger may be less flexible in its design and may therefore not provide enough cooling or may not provide optimal cooling for certain circumstances.

There is thus a need for an improved thermal management system.

In US2020/303792 A1, a battery thermal management system for an air vehicle includes a liquid heat exchange circuit. The system includes at least one battery in thermal communication with the liquid heat exchange circuit. The system includes a controller operatively connected to the liquid heat exchange circuit. The controller is configured and adapted to variably select whether heat will be rejected to the liquid heat exchange circuit.

The system includes at least one heat exchanger positioned on the liquid heat exchange circuit. With reference to FIG. 1 in US2020/303792 A1, liquid-air heat exchanger 112 is positioned on liquid heat exchange circuit 116 and air heat exchange circuit 114 to exchange heat therebetween. The air heat exchange circuit 114 includes a flow restrictor, e.g. a ram air door 115, to impede or allow flow of a heat sink fluid (e.g. ram air) to the liquid-air heat exchanger 112.

FIG. 3 in US2012/175080 A1 shows a system 42 in which a liquid coolant, conveyed by means of a conveying device 62, may be used in a closed circulation system. The closed circulation system comprises a heat dissipation device 44 implemented by combining a heat exchanger 46 and a fan 48 in a ram air duct 50.

In US2019/383568 A1, a cooling system with icing protection for a coolant flowing therein comprises a first heat exchanger to withdraw coolant thermal energy. The first heat exchanger uses a first fluid flow as a heat sink. A second heat exchanger withdraws thermal energy from the coolant using a second fluid flow, differing from the first fluid flow, as a heat sink. A conveyor device supplies the coolant to the first and second heat exchangers. The cooling system comprises a valve to regulate a volumetric flow of the coolant supplied to the second heat exchanger, a temperature sensor configured to measure a temperature of the coolant downstream of the first and/or second heat exchanger, and a control unit to control a delivery rate of the conveyor device and/or the volumetric flow such that the temperature measured by the temperature sensor does not fall below a predetermined coolant viscosity.

US2012/000630 A1 discloses method for cooling an electronic device in an aircraft, comprising the following steps: circulating a coolant in a cooling circuit, cooling the electronic device by means of the coolant, and in an aircraft outer-shell heat exchanger, emitting the heat taken up by the coolant.

In DE102017211561 A1, an aircraft comprises at least one power electronics component and a coolant circuit for cooling the at least one power electronics component by means of a coolant. The aircraft comprises temperature controlling means which are designed and arranged to adjust a temperature of the coolant circuit according to a temperature in or on the aircraft or according to a loss in power.

In US2011/284201 A1, an auxiliary cooling device is configured to be operated outside of an aircraft and comprises a cold source that is adapted to cool a coolant down to a desired low temperature, an auxiliary cooling device outlet which is connected to the cold source and connectable to a coolant supply connection of an aircraft liquid cooling system in order to deliver coolant cooled to a desired low temperature by the cold source to the aircraft liquid cooling system, and an auxiliary cooling device inlet which is connected to the cold source and connectable to a coolant discharge connection of the aircraft liquid cooling system in order to receive coolant heated by heat absorption from a heat load in the aircraft. US2020/381985 A1 discloses with reference to FIG. 4 that conduit system 146 extends between one or more motor controllers 150 and electric motor 125 so the same fluid 142 flows through both the electric motor 125 and the motor controllers 150.

### SUMMARY OF THE INVENTION

An object of the present disclosure is to provide an electric aircraft that seeks to mitigate, alleviate, or eliminate one or more of the above-identified deficiencies in the art and disadvantages singly or in any combination.

This object is obtained by an electric aircraft according to claim 1.

An advantage with a thermal management system as defined in claim 1 is that it provides an additional source for controlling the temperature of the cooling fluid inside the fluid cooling circuit. By having the possibility to by-pass the heat exchanger using a heat exchanger by-pass valve and having the possibility to increase the cooling by opening a ram air inlet door allowing ram air cooling to the heat exchanger, the thermal management system as defined in claim 1 allows for improved control of the thermal management system. The system can also be set-up for a variety of different scenarios and can operate over large ambient temperature ranges.

The thermal management system may further comprise a cabin climate circuit wherein the fluid cooling circuit is arranged to be in thermal connection with the cabin climate circuit. The cabin climate circuit may be arranged to utilize heat from cooling fluid heated from heat exchange with the thermal load to control a cabin temperature. In order to utilise the heat generated by the thermal load and carried by the cooling fluid of the fluid cooling circuit, a cabin climate circuit can be made to be in thermal connection with the fluid cooling circuit. In this way, heated cooling fluid in the fluid cooling circuit can carry heat to the cabin climate circuit, thereby reducing or removing the need for heating of the cabin as is used today.

The cabin climate circuit may be in fluid connection with the fluid cooling circuit, or the cabin climate circuit may be arranged to exchange heat with heated cooling fluid in the fluid cooling circuit. This provides different ways to best transfer the heat from the cooling fluid to the cabin climate circuit and opens up for a flexibility in designs of the fluid cooling circuit and the cabin climate circuit.

The fluid cooling circuit may comprise a flushing inlet fitting and a flushing outlet fitting arranged to connect flushing equipment for flushing the fluid cooling circuit. With regular intervals, the cooling fluid in the cooling fluid circuit needs to be replaced. In order to make replacing the cooling fluid during maintenance easy and time efficient, the fluid cooling circuit may comprise a flushing inlet fitting and a flushing outlet fitting arranged to connect a flushing equipment for flushing the fluid cooling circuit.

The fluid cooling circuit may comprise a cooling inlet fitting and a cooling outlet fitting arranged to connect a cooling arrangement for circulating cooling fluid in the fluid cooling circuit. Under certain circumstances, it is necessary to be able to provide the fluid cooling circuit with means for circulation cooling fluid in the fluid cooling circuit. This is for instance done when heat is generated by the thermal load when there is no power to drive the fluid cooling circuit's cooling pump. This can be the case when a vehicle comprising a thermal management system is charging.

The thermal load is an electric motor with at least two associated motor controllers. A thermal management system as defined in claim 1 arranged to provide cooling to the electric motor and the at least two motor controllers provides for a versatile system for many kinds of applications.

A cooling channel of the electric motor and a cooling channel of the at least two motor controllers may be connected in series or may be connected in parallel in the fluid cooling circuit. Depending on the construction of the electric motor, it may be beneficial to connect the cooling channels of the electric motor and the at least two motor controllers in series or in parallel in the fluid cooling circuit. This provides design versatility and the possibility to adapt flow rates and temperatures of the cooling fluid through the electric motor and motor controllers.

Opening and closing the ram air inlet door and opening and closing of the heat exchanger by-pass valve may be controlled independently or jointly to control a temperature of the cooling fluid. In order to provide a versatile control of the temperature of the cooling fluid, the opening and closing of the heat exchanger by-pass valve and the ram air inlet door may be made independently of each other to better control the temperature of the cooling fluid. For certain applications, the opening and closing of the heat exchanger by-pass valve and the ram air inlet door may be linked such that they open and close together according to pre-set algorithms. This provides an alternative control of the temperature of the cooling fluid.

The ram air inlet door and heat exchanger by-pass valve may be controlled independently or jointly to prevent freezing of the cooling fluid. In one example of temperature control of the cooling fluid, the thermal management system is arranged to prevent freezing of the cooling fluid. Similar to what is described above, the control of the heat exchanger by-pass valve and the ram air inlet door can be controlled independently or linked according to pre-set algorithms.

To prevent freezing of the cooling fluid, the ram air inlet door may reduce the amount of air that enters through the ram door, by closing the ram door partly or completely, and the heat exchanger by-pass valve may at least partially open the by-pass valve to allow heated return fluid to recirculate in the cooling loop when the temperature of the cooling fluid is measured to be within five degrees Celsius from its freezing temperature.

The fluid cooling circuit may be arranged to circulate a cooling fluid being one or more of
Water,
Ethylene glycol,
Silicate ester,
Polyalphaolefin (PAO).

Depending on the heat needed to be carried by the cooling fluid for specific applications, a variety of cooling fluids are conceivable. The list is not to be seen as exhaustive as other cooling fluids may also fulfil the requirements for one or more application.

The electrical aircraft according to claim 1 can greatly benefit from the thermal management system as defined in claim 1.

The cabin climate circuit may be an aircraft cabin climate circuit. In this way, an electric aircraft can benefit from the heat generated by the thermal load of the thermal management system such that the aircraft cabin needs less or no heating of its own.

Not according to the claims, the thermal load may comprise an electric battery arranged in the fuselage of the electric aircraft or in a separate compartment attached to the underside of the fuselage. Not according to the claims, one example of a thermal load in an electric aircraft benefitting from a thermal management system is the electric battery, which generates a large amount of heat during use.

The thermal load which is an electric motor with at least two associated motor controllers may be arranged in a nacelle of the electric aircraft. The thermal load which generates a large amount of heat during use, benefits from the thermal management system.

A further thermal load may comprise a combustion turbine connected to a generator. In order to extend the range of the electric aircraft, a combustion turbine connected to a generator may be a thermal load suitable for the thermal management system. The generator driven by the combustion turbine may provide additional electric power to one or more of the batteries of the electric aircraft or provide electric power to one or more of the electric motors. In this way, the amount of electric power available can be increased, leading to that the electric aircraft can stay airborne for longer.

The flushing inlet fitting may be arranged in the nacelle and the flushing outlet fitting may be arranged in the nacelle. This arrangement provides easy access for maintenance crew to flush the fluid cooling circuit and simplifies handling of the flushed cooling fluid to prevent it from spilling.

The cooling inlet fitting may be arranged in the nacelle and the cooling outlet fitting may be arranged in the nacelle and may be arranged to provide cooling fluid to the fluid cooling circuit while the electric aircraft is on the ground. This arrangement provides easy access for maintenance crew, simplifying cooling while the aircraft is on the ground.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 schematically shows an overview of a first example embodiment of a thermal management system as defined in the claims,
Figure 2 schematically shows an overview of a second example embodiment of a thermal management system as defined in the claims,
Figure 3 schematically shows an overview of a third example embodiment of a thermal management system as defined in the claims,
Figure 4 schematically shows an overview of a fourth example embodiment of a thermal management system as defined in the claims,
Figure 5 schematically shows an overview of a fifth example embodiment of a thermal management system as defined in the claims,
Figure 6 schematically shows an overview of a sixth example embodiment of a thermal management system as defined in the claims,
Figure 7 schematically shows an overview of an electric aircraft according to the claims.

### DETAILED DESCRIPTION

Aspects of the present disclosure will be described more fully hereinafter with reference to the accompanying drawings. The apparatus disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

The thermal management system according to the disclosure aims at solving the problem of providing a good way to control the temperature of a cooling fluid inside a fluid cooling circuit. To solve this problem, the thermal management system of the disclosure comprises a cooling pump arranged to circulate cooling fluid inside the fluid cooling circuit. A heat exchanger is connected between the cooling channel in the thermal load and the cooling pump. The fluid cooling circuit further comprises a heat exchanger by-pass valve connected to the cooling channel in the thermal load and to the cooling pump such that cooling fluid can by-pass the heat exchanger when the by-pass valve is open.

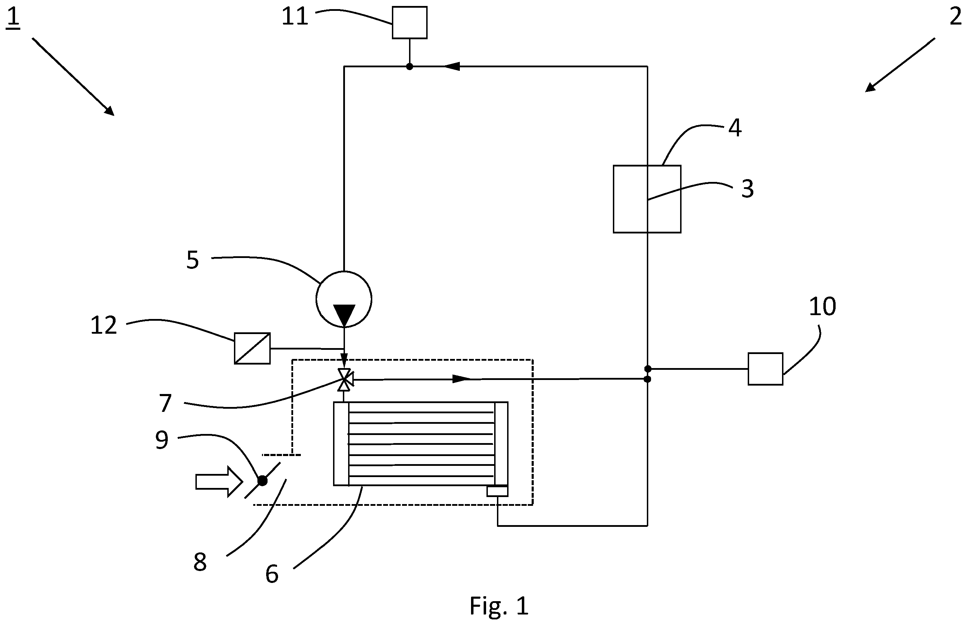

Figure 1 schematically shows an overview of a first example embodiment of a thermal management system 1 according to the invention. The thermal management system 1 comprises a fluid cooling circuit 2 comprising a cooling channel 3 in a thermal load 4. In figure 1, the thermal load 4 is generalised to show the layout of the fluid cooling circuit 2. The various parts making up the fluid cooling circuit 2 are known in the art and are not described in detail.

The cooling channel 3 in the thermal load 4 provides cooling fluid to cool4e the thermal load 4 such that the thermal management system 1 prevents the internal temperature of the thermal load 4 to exceed its maximum acceptable value. The thermal management system 1 further comprises a cooling pump 5 arranged to circulate cooling fluid inside the fluid cooling circuit 2. A heat exchanger 6 arranged to reduce the temperature of the cooling fluid is connected between the cooling channel 3 in the thermal load 4 and the cooling pump 5. The fluid cooling circuit 2 further comprises a heat exchanger by-pass valve 7 connected to the cooling channel 3 in the thermal load 4 and to the cooling pump 5 such that cooling fluid can by-pass the heat exchanger 6 when the heat exchanger by-pass valve 7 is open. The heat exchanger 6 can be bypassed in case the cooling fluid temperature upstream the heat exchanger 6 is below a predetermined temperature. The thermal management system 1 further comprises a ram air channel 8 comprising a ram air inlet door 9, wherein the ram air channel 8 is arranged to direct ram air entering through the ram air inlet door 9 to provide cooling to the heat exchanger 6 by ram air cooling when the ram air inlet door 9 is open. The thermal management system 1 further comprises a first temperature sensor 10 arranged to measure the temperature of the cooling fluid after it leaves the heat exchanger 6 and before it enters (or upstream) the cooling channel 3 of the thermal load 4. A second temperature sensor 11 is arranged to measure the temperature of the cooling fluid after it leaves (or downstream) the cooling channel 3 of the thermal load 4 and before it enters the cooling pump 5. The thermal management system 1 further comprises a pressure and temperature sensor 12 arranged to measure the pressure and temperature of the cooling fluid after leaving the cooling pump 5 and before (or upstream) the cooling fluid enters the heat exchanger 6 or bypasses the heat exchanger 6 to enter directly into the cooling channel 3 of the thermal load 4. The pressure and temperature sensor 12 also monitors the status/health of the cooling pump 5. The heat exchanger by-pass valve 7 is connected such that the first temperature sensor 10 also measures the temperature of the bypassed cooling fluid. The cooling channels 3 in the thermal load 4 are in one example connected to the rest of the fluid cooling circuit 2 with cooling ports comprising any suitable fitting.

The various sensors 10, 11, 12 are connected to a controller such as a motor controller. The controller provides the thermal management system 1 with sensor data in order for the thermal management system 1 to control the temperature of the cooling liquid to a set temperature or temperature interval.

The controller controls the opening and closing of the ram air inlet door 9 and the heat exchanger by-pass valve 7 to control the temperature of the cooling fluid. The ram air inlet door 9 and heat exchanger by-pass valve 7 can be controlled independently or jointly. With controlled jointly is meant that opening and closing of one of the ram air inlet door 9 and the heat exchanger by-pass valve 7, is determined by the opening and closing of the other. Alternatively, each of the ram air inlet door 9 and heat exchanger by-pass valve 7 can open and close completely independent of each other. The ram air inlet door 9 and by-pass valves are operated using suitable actuators electrically connected to the controller that provides power and open and close control signals to the actuators.

The opening and closing of the ram air inlet door 9 and the heat exchanger by-pass valve 7 can be controlled continuously or stepwise.

In one use example of the thermal management system 1, the ram air inlet door 9 and heat exchanger by-pass valve 7 are controlled independently or jointly to prevent freezing of the cooling fluid. In order to prevent freezing of the cooling fluid, the ram air inlet door 9 reduces the amount of air that enters through the ram door and passing the heat exchanger 6, by closing the ram air inlet door 9 partly or completely and heat exchanger by-pass valve 7 at least partially opens to allow heated return cooling fluid to recirculate in the cooling fluid circuit when the temperature of the cooling fluid is measured to be within five degrees Celsius from its freezing temperature.

The high-level requirements of the thermal management system 1 is to provide automatic control of the cooling fluid flow and temperature of the thermal load 4. The control, monitoring, indication and fault isolation logics of the thermal management system 1 is implemented within the controller. The controller may be provided with one or more auxiliary controllers, where the controller and auxiliary controller(s) have the capability of control, monitor, provide indication and fault isolation of the components of the thermal management system 1. Control logic will define which controller that is an "in-control" controller and which controller that is a "stand-by" controller for the thermal management system 1. The thermal management system 1 further controls the cooling fluid flow and temperature of the thermal management system 1 by control of at least the cooling pump 5, power to the various components of the thermal management system 1 and to the thermal load 4. If an auxiliary cooling pump is used, the thermal management system 1 controls the activation of the cooling pumps and the selection between which cooling pump is the active pump or the stand-by pump.

The thermal management system 1 is arranged to provide information to an avionics system including cockpit indication such as system status, crew alerting system (CAS) status/advisory/caution/warning messages and maintenance messages,

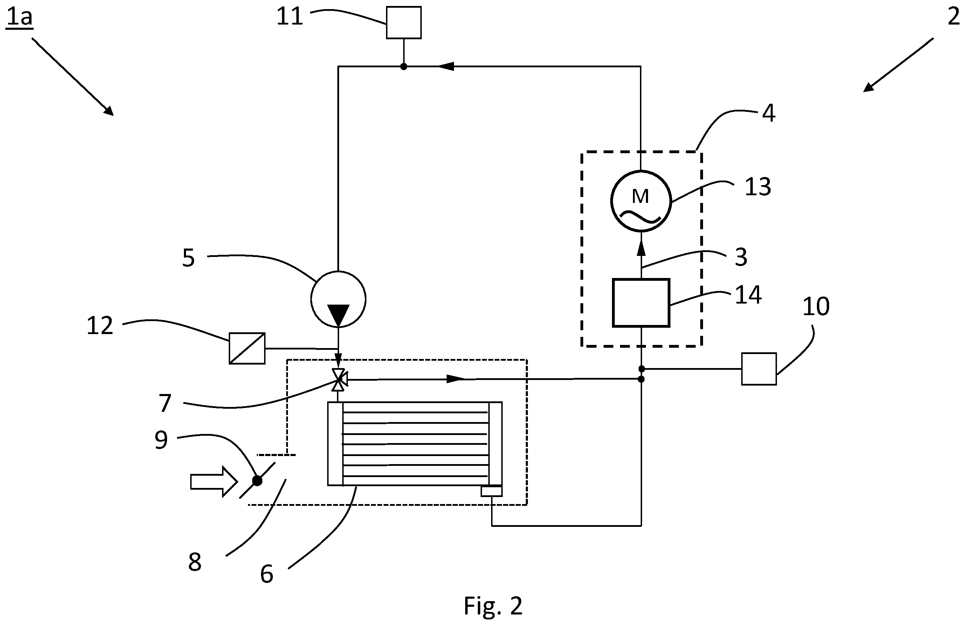

Figure 2 schematically shows an overview of a second example embodiment of a thermal management system 1a as defined in the claims. In figure 2, the fluid cooling circuit 2 differs from the one in figure 1 in that the thermal load 4 is an electric motor 13 with, not according to the claims, one associated motor controller 14 connected in series with the electric motor 13. The complete thermal load 4 is indicated by the dashed box around the two components. It is of course possible to have more than one motor controller 14 connected in series with the electric motor 13.

The thermal management system 1a controls the cooling fluid temperature based on information provided by at least the following sensors:
An internal temperature sensor in each electric motor 13
An internal temperature sensor in each motor controller 14
The first temperature sensor 10 upstream the thermal load 4
The second temperature sensor 11 downstream the thermal load 4
The pressure and temperature sensor 12 upstream the heat exchanger 6

The electric motor 13 converts high voltage power input from an electric power source into rotational power. The electric motor 13 is of a self-containing design in case of rotor failure and has a full-redundant dual-winding design. Powered by one or more independent motor controllers 14 and converts high voltage DC from battery to high voltage AC to motor. The electric motor 13 comprises means for monitoring the motor information (e.g., rotation direction, position, temperature, etc.).

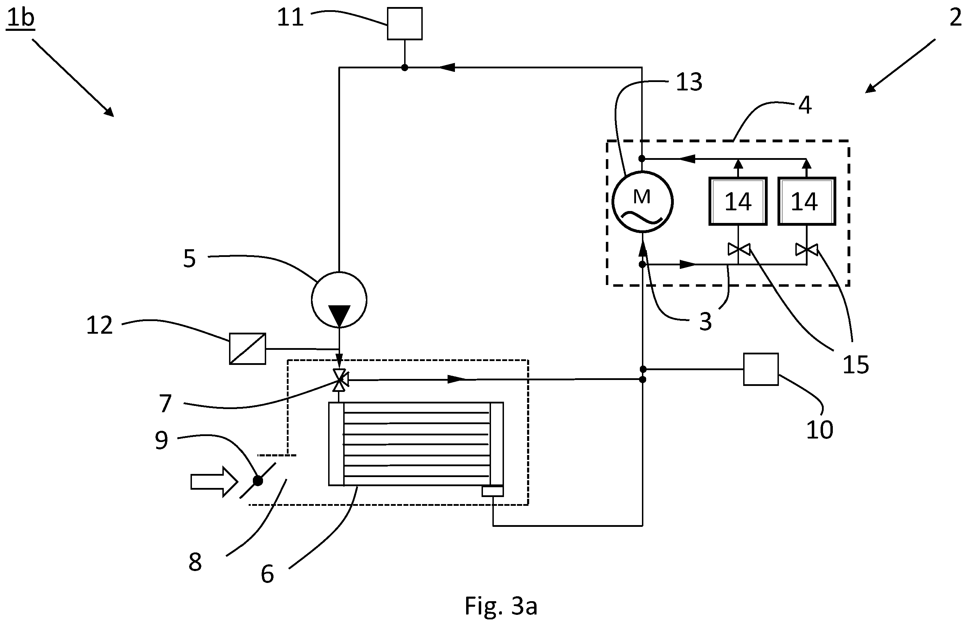

Figure 3a schematically shows an overview of a third example embodiment of a thermal management system 1b according to the invention. In figure 3a, the fluid cooling circuit 2 differs from the one in figure 2 in that the thermal load 4 is an electric motor 13 with two associated motor controllers 14 connected in parallel with the electric motor 13. More than two associated motor controllers 14 can be connected in parallel with the electric motor 13. The thermal load is indicated by the dashed box around the three components. The fluid cooling circuit 2 is in this example embodiment provided with flow balancing means 15 arranged before the motor controllers 14 such that the flow of cooling fluid entering the fluid channels of the motor controllers 14 can be balanced to provide equal cooling to both motor controllers 14.

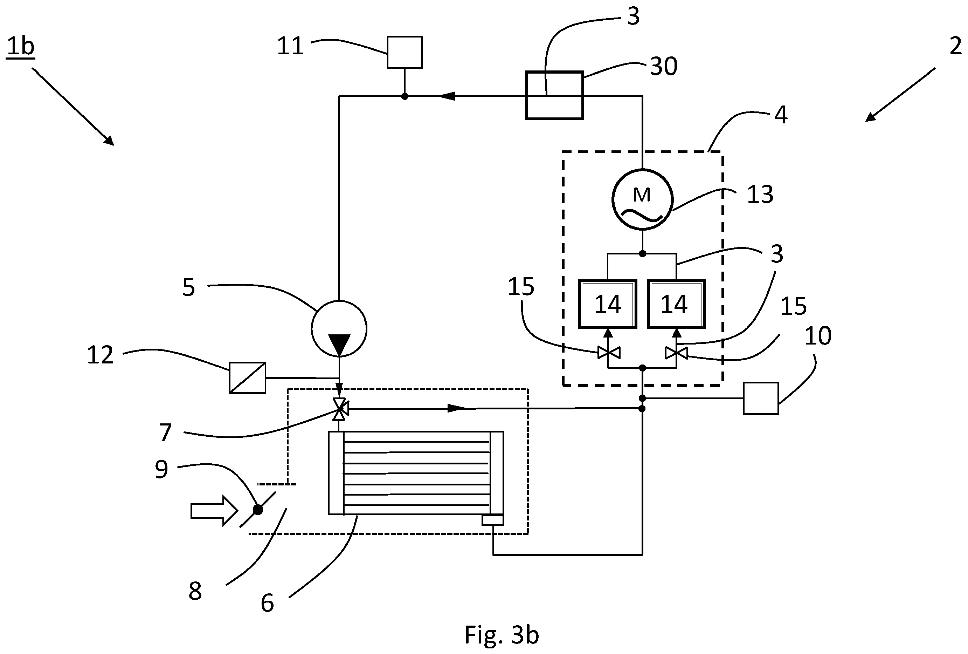

Alternatively, as shown in figure 3b the motor controllers 14 can be connected in parallel with each other and the motor controllers 14 in turn is connected in series with the electric motor 13. A further alternative shown in figure 3b is that the thermal management system 1b may comprises an additional thermal load 30 in the form of a combustion turbine connected to a generator. A cooling channel 3 for the combustion turbine and generator is schematically shown in the figure.

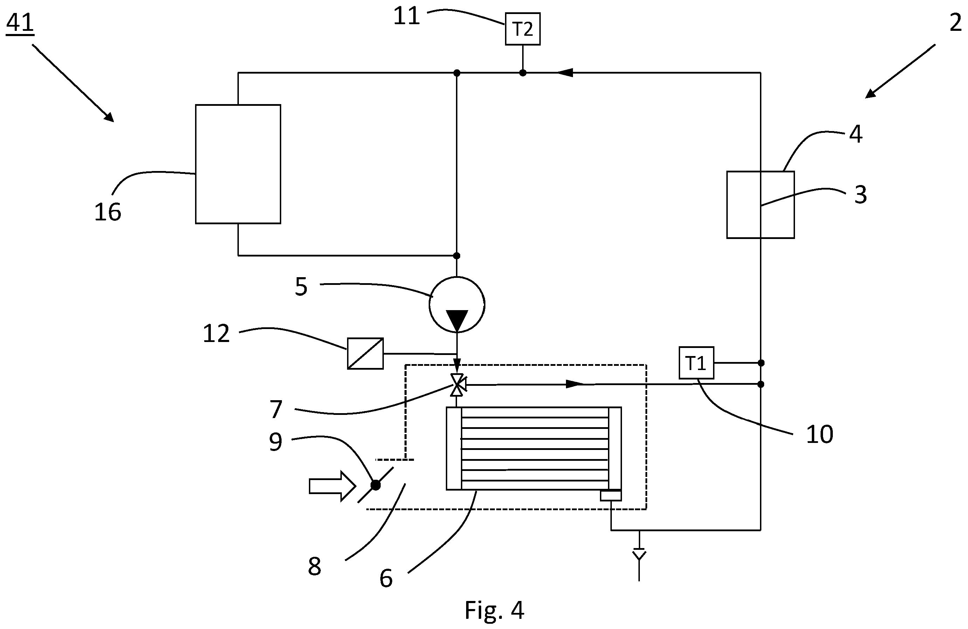

Figure 4 schematically shows an overview of a fourth example embodiment of a thermal management system 41 according to the invention. In figure 4, the thermal management system 41 differs from the one in figure 1 in that the thermal management system 41 further comprises a cabin climate circuit 16 comprising a cabin thermally connected to the cabin climate circuit 16. The fluid cooling circuit 2 is arranged to be in thermal connection with the cabin climate circuit 16, in order for the cabin climate circuit 16 to be able to utilize heat from the cooling fluid heated from heat exchange with the thermal load 4. The heat from the thermal load 4 can thus be used to control a cabin temperature. In the example embodiment of figure 4, the cabin climate circuit 16 is in fluid connection with the fluid cooling circuit 2 meaning that cooling fluid is shared between the fluid cooling circuit 2 and the cabin climate cooling circuit.

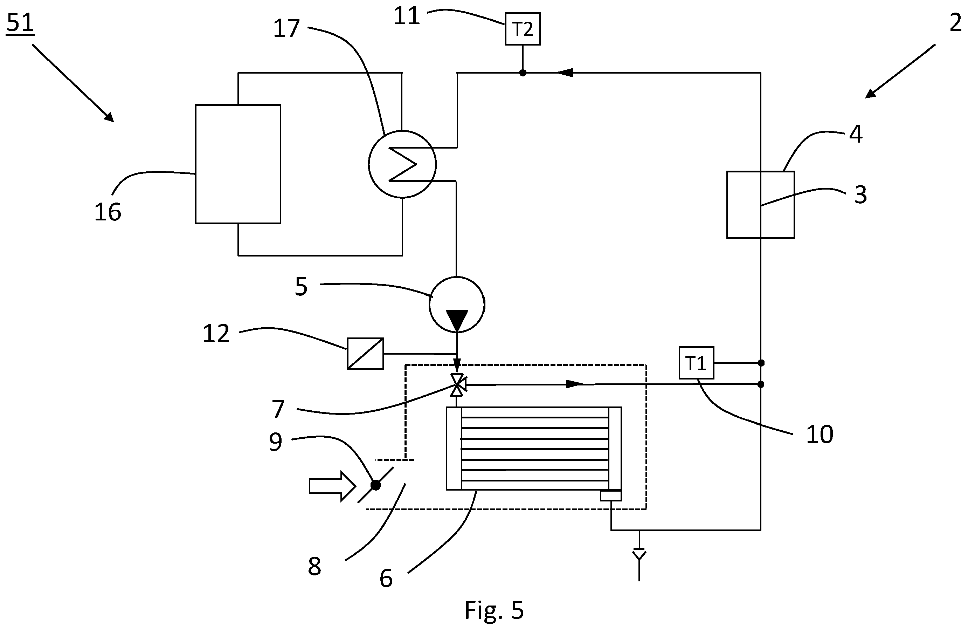

Figure 5 schematically shows an overview of a fifth example embodiment of a thermal management system 51 according to the invention. In figure 5, the thermal management system 51 differs from the one in figure 4 in that cabin climate circuit 16 comprises a cabin climate heat exchanger 17 arranged to exchange heat with heated cooling fluid in the fluid cooling circuit 2. It is also possible for the cabin climate heat exchanger 17 to be part of the fluid cooling circuit 2 instead.

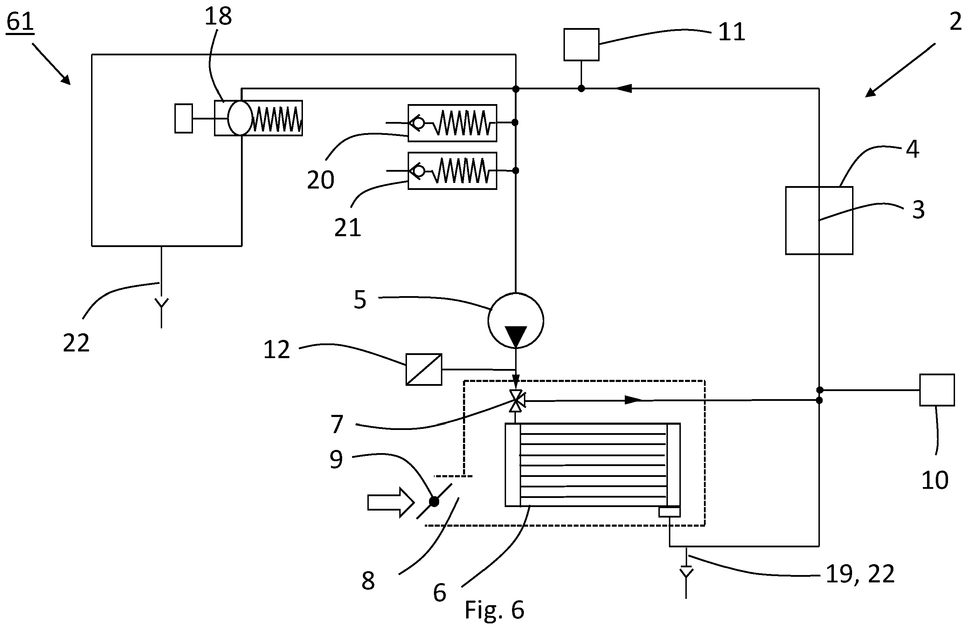

Figure 6 schematically shows an overview of a sixth example embodiment of a thermal management system 61 according to the invention. In figure 6, the fluid cooling circuit 2 of figure 1 is supplemented with a flushing inlet fitting 18 and a flushing outlet fitting 19 arranged to connect flushing equipment for flushing the fluid cooling circuit 2. In figure 6, a cooling inlet fitting 20 and a cooling outlet fitting 21 arranged to connect a cooling arrangement for circulating cooling fluid in the fluid cooling circuit 2 are also shown. For completeness, fluid circuit draining provisions 22 are also shown where the cooling liquid can be drained form.

Depending on design, the thermal management system may be equipped with both or only one of the two fitting types. The flushing inlet fitting 18, flushing outlet fitting 19, cooling inlet fitting 20 and cooling outlet fitting 21 preferably comprise a quick coupling known in the art.

It is to be understood that the fluid cooling circuit 2 and cabin climate circuit 16 of the example embodiments comprise other suitable components such as a secondary cooling pump and other redundancy measures, draining provisions, overpressure protection, filters, accumulators, check valves etc. For simplicity, these are not shown in the figures.

The cooling fluid of the fluid cooling circuit 2 in the example embodiments is one or more of:
Water,
Ethylene glycol,
Silicate ester,
Polyalphaolefin (PAO).

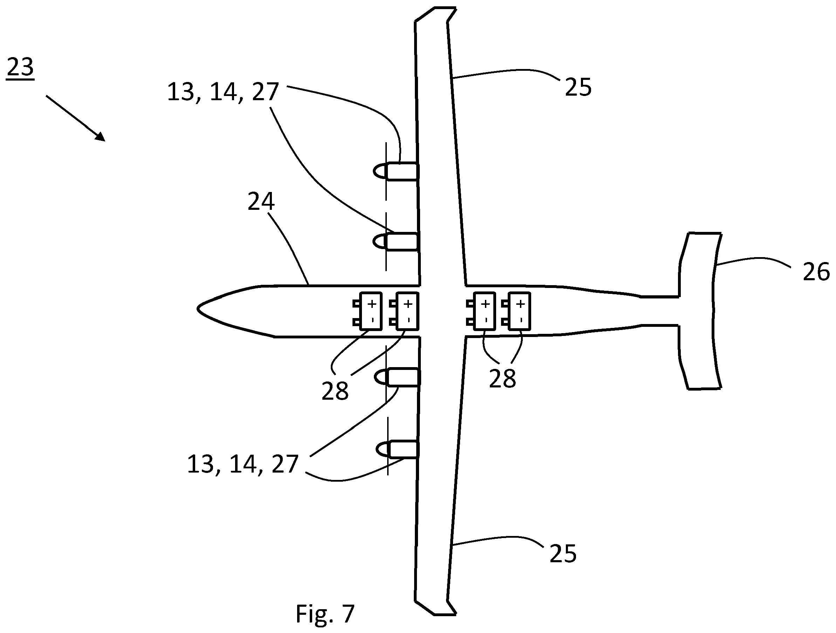

Figure 7 schematically shows an overview of an electric aircraft 23 comprising a thermal management system as described above. The electric aircraft 23 in this non-limiting example comprises a fuselage 24 to which two wings 25 and a tail 26 is attached. Underneath the wings 25, four nacelles with propellers 27 are mounted, two on each wing 25. An electric motor 13 and at least one motor controller 14 is arranged in each nacelle 27. To power the electric motors 13, electric batteries 28 are arranged in the lower part of the fuselage 24, or alternatively in a separate compartment attached to the underside of the fuselage 24. Each battery 28 is connected to one electric motor 13 via a battery power distribution unit connected to an inverter. The placements of the batteries 13 in figure 7 is merely illustrative and is not intended to be limiting.

The power distribution unit is connected to the one or more motor controllers 14 that is connected to an electric motor 13 and thereby controls the provision of electric power to the electric motor 13. The batteries may also be arranged in both the wings 25 and in the fuselage 24 of the electric aircraft 23. This is illustrated by a battery 28 in the fuselage of the aircraft in dashed lines. The electric motor 13 drives a propeller with hydro-mechanical or electrical pitch actuation. The propeller is capable of reversing thrust and feathering. In one example, the propellers on each wing 25 are counter-rotating.

In the electric aircraft 23, the thermal load 4 can besides the batteries, comprise the electric motor 13 and the at least one motor controller 14 arranged in the nacelles 27 of the electric aircraft 23. The thermal load 4 may also comprise a combustion turbine connected to a generator arranged to generate energy to support the batteries when providing power to one or more of the electric motors 13. The combustion turbine is arranged to rotate the generator, which in turn provides additional electric power to the electric motors 13. The combustion turbine is connected to a fuel tank and can be run on any suitable fuel. The generator is electrically connected to the battery power distribution unit of each of the four electric motors 13 and is thereby not mechanically connected to the propellers. The battery power distribution units can be arranged to provide power directly from the generator to one or more electric motors 13 or be arranged to provide power to charge one or more batteries. The turbine-generator arrangement may extend the range of the electric aircraft 23 if needed. The thermal load 4 may additionally comprise one or more of an avionics system thermal load, a cockpit thermal load or a hydraulic system thermal load.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description are to be regarded as illustrative in nature, and not restrictive.

### References:

1, 1a, 1b. Thermal management system
2. Fluid cooling circuit
3. Cooling channel
4. Thermal load
5. Cooling pump
6. Heat exchanger
7. Heat exchanger by-pass valve
8. Ram air channel
9. Ram air inlet door
10. First temperature sensor
11. Second temperature sensor
12. Pressure and temperature sensor
13. Electric motor
14. Motor controller
15. Flow balancing means
16. Cabin climate circuit
17. Cabin climate heat exchanger
18. Flushing inlet fitting
19. Flushing outlet fitting
20. Cooling inlet fitting
21. Cooling outlet fitting
22. Fluid circuit draining provisions
23. Electric aircraft
24. Fuselage
25. Wings
26. Tail
27. Nacelles
28. Batteries
41. Thermal management system with cabin climate circuit
51. Thermal management system with cabin climate heat exchanger
61. Thermal management system with flushing fittings

## Claims

1. Electric aircraft (23) comprising a thermal load (4) and a thermal management system (1, 1a, 1b, 41, 51, 61) comprising a fluid cooling circuit (2) comprising a cooling channel (3) in the thermal load (4) arranged to cool the thermal load (4), a cooling pump (5) arranged to circulate cooling fluid inside the fluid cooling circuit (2) and a heat exchanger (6) connected between the cooling channel (3) in the thermal load (4) and the cooling pump (5), wherein the fluid cooling circuit (2) further comprises a heat exchanger by-pass valve (7) connected to the cooling channel (3) in the thermal load (4) and to the cooling pump (5) such that cooling fluid can by-pass the heat exchanger (6) when the by-pass valve is open, wherein the thermal management system (1, 1a, 1b, 41, 51, 61) further comprises a ram air channel (8) comprising a ram air inlet door (9), wherein the ram air channel (8) is arranged to provide cooling to the heat exchanger (6) by ram air cooling when the ram air inlet door (9) is open, **characterized in that** the thermal load (4) is an electric motor (13) with at least two associated motor controllers (14) connected in parallel with the electric motor (13), wherein the fluid cooling circuit (2) comprises flow balancing means (15) arranged before the motor controllers (14) such that the flow of cooling fluid entering the fluid channels of the motor controllers (14) can be balanced to provide equal cooling to both motor controllers (14), and wherein the flow balancing means comprises one or more flow control valves.

2. Electric aircraft according to claim 1, wherein a cooling channel (3) of the electric motor (13) and a cooling channel (3) of the at least two motor controllers (14) are connected in series or are connected in parallel in the fluid cooling circuit (2).

3. Electric aircraft according to any one of claims 1-2, wherein the fluid cooling circuit (2) comprises a cooling channel (3) in a further thermal load (4, 30) of the electric aircraft, wherein the further thermal load (4, 30) comprises a combustion turbine connected to a generator.

4. Electric aircraft according to any one of the preceding claims, wherein the fluid cooling circuit (2) comprises a flushing inlet fitting (18) and a flushing outlet fitting (19) arranged to connect flushing equipment for flushing the fluid cooling circuit (2).

5. Electric aircraft according to any one of the preceding claims, wherein the fluid cooling circuit (2) comprises a cooling inlet fitting (20) and a cooling outlet fitting (21) arranged to connect a cooling arrangement for circulating cooling fluid in the fluid cooling circuit (2).

6. Electric aircraft according to any one of the preceding claims, wherein opening and closing the ram air inlet door (9) and opening and closing of the heat exchanger by-pass valve (7) are controlled independently or jointly to control a temperature of the cooling fluid.

7. Electric aircraft according to claim 6, wherein the ram air inlet door (9) and heat exchanger by-pass valve (7) are controlled independently or jointly to prevent freezing of the cooling fluid.

8. Electric aircraft according to claim 7, wherein to prevent freezing of the cooling fluid, the ram air inlet door (9) reduces the amount of air that enters through the ram door and passing the heat exchanger (6), by closing the ram air inlet door (9) partly or completely and the heat exchanger by-pass valve (7) at least partially opens to allow heated return cooling fluid to recirculate in the cooling fluid circuit when the temperature of the cooling fluid is measured to be within five degrees Celsius from its freezing temperature.

9. Electric aircraft according to any one of the preceding claims, wherein the fluid cooling circuit (2) is arranged to circulate a cooling fluid being one or more of
- Water,
- Ethylene glycol,
- Silicate ester,
- Polyalphaolefin (PAO).

10. Electric aircraft according to any one of the preceding claims, wherein the electric motor (13) and the at least two motor controllers (14) are arranged in a nacelle (27) of the electric aircraft (23).

11. Electric aircraft according to claim 10 when dependent on claim 4, wherein the flushing inlet fitting (18) is arranged in the nacelle (27) and the flushing outlet fitting (19) is arranged in the nacelle (27).

12. Electric aircraft according to claim 10 when dependent on claim 5, wherein the cooling inlet fitting (20) is arranged in the nacelle (27) and the cooling outlet fitting (21) is arranged in the nacelle (27), and are arranged to provide cooling fluid to the fluid cooling circuit (2) while the electric aircraft (23) is on the ground.

## Patentansprüche

1. Ein Elektroflugzeug (23), das eine thermische Last (4) und ein Wärmemanagementsystem (1, 1a, 1b, 41, 51, 61) beinhaltet, das einen Fluidkühlkreislauf (2) beinhaltet, der einen Kühlkanal (3) in der thermischen Last (4), der angeordnet ist, um die thermische Last (4) zu kühlen, eine Kühlpumpe (5), die angeordnet ist, um Kühlfluid innerhalb des Fluidkühlkreislaufs (2) zu zirkulieren, und einen Wärmetauscher (6), der zwischen dem Kühlkanal (3) in der thermischen Last (4) und der Kühlpumpe (5) verbunden ist, beinhaltet, wobei der Fluidkühlkreislauf (2) ferner ein Wärmetauscher-Umgehungsventil (7) beinhaltet, das mit dem Kühlkanal (3) in der thermischen Last (4) und mit der Kühlpumpe (5) verbunden ist, so dass Kühlfluid den Wärmetauscher (6) umgehen kann, wenn das Umgehungsventil offen ist, wobei das Wärmemanagementsystem (1, 1a, 1b, 41, 51, 61) ferner einen Stauluftkanal (8) beinhaltet, der eine Staulufteinlassklappe (9) beinhaltet, wobei der Stauluftkanal (8) angeordnet ist, um dem Wärmetauscher (6) durch Stauluftkühlung Kühlung bereitzustellen, wenn die Staulufteinlassklappe (9) offen ist, **dadurch gekennzeichnet, dass** die thermische Last (4) ein Elektromotor (13) mit mindestens zwei assoziierten Motorsteuerungen (14) ist, die parallel mit dem Elektromotor (13) verbunden sind, wobei der Fluidkühlkreislauf (2) Strömungsausgleichsmittel (15) beinhaltet, die vor den Motorsteuerungen (14) angeordnet sind, so dass die Strömung von Kühlfluid, das in die Fluidkanäle der Motorsteuerungen (14) eintritt, ausgeglichen werden kann, um beiden Motorsteuerungen (14) gleiche Kühlung bereitzustellen, und wobei die Strömungsausgleichsmittel ein oder mehrere Strömungssteuerventile beinhalten.

2. Elektroflugzeug gemäß Anspruch 1, wobei ein Kühlkanal (3) des Elektromotors (13) und ein Kühlkanal (3) der mindestens zwei Motorsteuerungen (14) in Reihe oder parallel in dem Fluidkühlkreislauf (2) verbunden sind.

3. Elektroflugzeug gemäß einem der Ansprüche 1-2, wobei der Fluidkühlkreislauf (2) einen Kühlkanal (3) in einer weiteren thermischen Last (4, 30) des Elektroflugzeugs beinhaltet, wobei die weitere thermische Last (4, 30) eine Verbrennungsturbine beinhaltet, die mit einem Generator verbunden ist.

4. Elektroflugzeug gemäß einem der vorhergehenden Ansprüche, wobei der Fluidkühlkreislauf (2) eine Spüleinlassarmatur (18) und eine Spülauslassarmatur (19) beinhaltet, die angeordnet sind, um Spülausrüstung zum Spülen des Fluidkühlkreislaufs (2) zu verbinden.

5. Elektroflugzeug gemäß einem der vorhergehenden Ansprüche, wobei der Fluidkühlkreislauf (2) eine Kühleinlassarmatur (20) und eine Kühlauslassarmatur (21) beinhaltet, die angeordnet sind, um eine Kühlanordnung zum Zirkulieren von Kühlfluid in dem Fluidkühlkreislauf (2) zu verbinden.

6. Elektroflugzeug gemäß einem der vorhergehenden Ansprüche, wobei das Öffnen und Schließen der Staulufteinlassklappe (9) und das Öffnen und Schließen des Wärmetauscher-Umgehungsventils (7) unabhängig oder gemeinsam gesteuert werden, um eine Temperatur des Kühlfluids zu steuern.

7. Elektroflugzeug gemäß Anspruch 6, wobei die Staulufteinlassklappe (9) und das Wärmetauscher-Umgehungsventil (7) unabhängig oder gemeinsam gesteuert werden, um ein Einfrieren des Kühlfluids zu verhindern.

8. Elektroflugzeug gemäß Anspruch 7, wobei, um ein Einfrieren des Kühlfluids zu verhindern, die Staulufteinlassklappe (9) die Luftmenge reduziert, die durch die Stauklappe eintritt und den Wärmetauscher (6) passiert, indem die Staulufteinlassklappe (9) teilweise oder vollständig geschlossen wird und das Wärmetauscher-Umgehungsventil (7) sich zumindest teilweise öffnet, um zu ermöglichen, dass erwärmtes Rücklaufkühlfluid in dem Kühlfluidkreislauf rezirkuliert, wenn gemessen wird, dass die Temperatur des Kühlfluids innerhalb von fünf Grad Celsius von seiner Gefriertemperatur liegt.

9. Elektroflugzeug gemäß einem der vorhergehenden Ansprüche, wobei der Fluidkühlkreislauf (2) angeordnet ist, um ein Kühlfluid zu zirkulieren, das eines oder mehrere von Folgenden ist:
- Wasser,
- Ethylenglycol,
- Silicatester,
- Polyalphaolefin (PAO).

10. Elektroflugzeug gemäß einem der vorhergehenden Ansprüche, wobei der Elektromotor (13) und die mindestens zwei Motorsteuerungen (14) in einer Gondel (27) des Elektroflugzeugs (23) angeordnet sind.

11. Elektroflugzeug gemäß Anspruch 10 in Abhängigkeit von Anspruch 4, wobei die Spüleinlassarmatur (18) in der Gondel (27) angeordnet ist und die Spülauslassarmatur (19) in der Gondel (27) angeordnet ist.

12. Elektroflugzeug gemäß Anspruch 10 in Abhängigkeit von Anspruch 5, wobei die Kühleinlassarmatur (20) in der Gondel (27) angeordnet ist und die Kühlauslassarmatur (21) in der Gondel (27) angeordnet ist und angeordnet sind, um Kühlfluid für den Fluidkühlkreislauf (2) bereitzustellen, während sich das Elektroflugzeug (23) am Boden befindet.

## Revendications

1. Aéronef électrique (23) comprenant une charge thermique (4) et un système de gestion thermique (1, 1a, 1b, 41, 51, 61) comprenant un circuit de refroidissement de fluide (2) comprenant un canal de refroidissement (3) dans la charge thermique (4) agencé pour refroidir la charge thermique (4), une pompe de refroidissement (5) agencée pour faire circuler du fluide de refroidissement à l'intérieur du circuit de refroidissement de fluide (2) et un échangeur de chaleur (6) raccordé entre le canal de refroidissement (3) dans la charge thermique (4) et la pompe de refroidissement (5), dans lequel le circuit de refroidissement de fluide (2) comprend en outre un clapet de contournement d'échangeur de chaleur (7) raccordé au canal de refroidissement (3) dans la charge thermique (4) et à la pompe de refroidissement (5) de telle sorte que du fluide de refroidissement peut contourner l'échangeur de chaleur (6) lorsque le clapet de contournement est ouvert, dans lequel le système de gestion thermique (1, 1a, 1b, 41, 51, 61) comprend en outre un canal d'air dynamique (8) comprenant une porte d'entrée d'air dynamique (9), le canal d'air dynamique (8) étant agencé pour fournir un refroidissement à l'échangeur de chaleur (6) par refroidissement d'air dynamique lorsque la porte d'entrée d'air dynamique (9) est ouverte, **caractérisé en ce que** la charge thermique (4) est un moteur électrique (13) avec au moins deux dispositifs de contrôle de moteur (14) associés raccordés en parallèle au moteur électrique (13), dans lequel le circuit de refroidissement de fluide (2) comprend un moyen d'équilibrage d'écoulement (15) agencé avant les dispositifs de contrôle de moteur (14) de telle sorte que l'écoulement de fluide de refroidissement entrant dans les canaux de fluide des dispositifs de contrôle de moteur (14) peut être équilibré pour fournir un refroidissement égal aux deux dispositifs de contrôle de moteur (14), et dans lequel le moyen d'équilibrage d'écoulement comprend un ou plusieurs clapets de contrôle d'écoulement.

2. Aéronef électrique selon la revendication 1, dans lequel un canal de refroidissement (3) du moteur électrique (13) et un canal de refroidissement (3) des au moins deux dispositifs de contrôle de moteur (14) sont raccordés en série ou sont raccordés en parallèle dans le circuit de refroidissement de fluide (2).

3. Aéronef électrique selon l'une quelconque des revendications 1 à 2, dans lequel le circuit de refroidissement de fluide (2) comprend un canal de refroidissement (3) dans une autre charge thermique (4, 30) de l'aéronef électrique, l'autre charge thermique (4, 30) comprenant une turbine à combustion raccordée à un générateur.

4. Aéronef électrique selon l'une quelconque des revendications précédentes, dans lequel le circuit de refroidissement de fluide (2) comprend un organe de fixation d'entrée de rinçage (18) et un organe de fixation de sortie de rinçage (19) agencés pour se raccorder à un équipement de rinçage pour rincer le circuit de refroidissement de fluide (2).

5. Aéronef électrique selon l'une quelconque des revendications précédentes, dans lequel le circuit de refroidissement de fluide (2) comprend un organe de fixation d'entrée de refroidissement (20) et un organe de fixation de sortie de refroidissement (21) agencés pour se raccorder à un agencement de refroidissement pour faire circuler du fluide de refroidissement dans le circuit de refroidissement de fluide (2).

6. Aéronef électrique selon l'une quelconque des revendications précédentes, dans lequel l'ouverture et la fermeture de la porte d'entrée d'air dynamique (9) et l'ouverture et la fermeture du clapet de contournement d'échangeur de chaleur (7) sont contrôlées indépendamment ou conjointement pour contrôler une température du fluide de refroidissement.

7. Aéronef électrique selon la revendication 6, dans lequel la porte d'entrée d'air dynamique (9) et le clapet de contournement d'échangeur de chaleur (7) sont contrôlés indépendamment ou conjointement pour empêcher le gel du fluide de refroidissement.

8. Aéronef électrique selon la revendication 7, dans lequel pour empêcher le gel du fluide de refroidissement, la porte d'entrée d'air dynamique (9) réduit la quantité d'air qui entre à travers la porte dynamique et passant par l'échangeur de chaleur (6), en fermant la porte d'entrée d'air dynamique (9) partiellement ou complètement et le clapet de contournement d'échangeur de chaleur (7) s'ouvre au moins partiellement pour permettre à du fluide de refroidissement de retour chauffé de recirculer dans le circuit de fluide de refroidissement lorsque la température du fluide de refroidissement est mesurée comme étant dans les cinq degrés Celsius de sa température de gel.

9. Aéronef électrique selon l'une quelconque des revendications précédentes, dans lequel le circuit de refroidissement de fluide (2) est agencé pour faire circuler un fluide de refroidissement qui est un ou plusieurs fluides parmi
- de l'eau,
- de l'éthylène glycol,
- de l'ester de silicate,
- de la polyalphaoléfine (PAO).

10. Aéronef électrique selon l'une quelconque des revendications précédentes, dans lequel le moteur électrique (13) et les au moins deux dispositifs de contrôle de moteur (14) sont agencés dans une nacelle (27) de l'aéronef électrique (23).

11. Aéronef électrique selon la revendication 10 lorsqu'elle dépend de la revendication 4, dans lequel l'organe de fixation d'entrée de rinçage (18) est agencé dans la nacelle (27) et l'organe de fixation de sortie de rinçage (19) est agencé dans la nacelle (27).

12. Aéronef électrique selon la revendication 10 lorsqu'elle dépend de la revendication 5, dans lequel l'organe de fixation d'entrée de refroidissement (20) est agencé dans la nacelle (27) et l'organe de fixation de sortie de refroidissement (21) est agencé dans la nacelle (27), et sont agencés pour fournir du fluide de refroidissement au circuit de refroidissement de fluide (2) pendant que l'aéronef électrique (23) est au sol.
